# EUROPÄISCHE PATENTANMELDUNG

(11) **EP 4 011 641 A1**
(43) Veröffentlichungstag der Anmeldung: **15.06.2022**
(21) Anmeldenummer: 21212646.0
(22) Anmeldetag: 06.12.2021
(51) Int. Cl.: B60B 27/02, B62K 25/02

(54) **STECKACHSE MIT KUPPLUNGSADAPTER UND SCHNELLSPANNER**

(30) Priorität: 09.12.2020 DE 202020107101 U
(71) Anmelder: Messingschlager GmbH & Co. KG, 96148 Baunach (DE)
(72) Erfinder: Messingschlager, Benno, 96148 Baunach (DE)
(74) Vertreter: Feller, Frank

(57) **Zusammenfassung**

Die vorliegende Erfindung betrifft eine Steckachse (10) zur Befestigung eines Laufrads an einem Fahrradrahmen eines Fahrrads, umfassend eine Stange (20) mit einem ersten Gewindeabschnitt (22) zur Befestigung an einem ersten Rahmenabschnitt des Fahrradrahmens und einem Montageabschnitt (26) zur Befestigung an einem zweiten Rahmenabschnitt des Fahrradrahmens, eine Schnellspanneinheit (30), welche mit der Stange (20) verbunden ist, und einen Kupplungsadapterabschnitt (40) zur Aufnahme eines Kupplungselements (100) für ein Anbauteil, wobei die Schnellspanneinheit (30) einen zweiten Gewindeabschnitt (32) umfasst und die Stange (20) einen komplementär zu dem zweiten Gewindeabschnitt (32) ausgebildeten dritten Gewindeabschnitt (24) umfasst, sodass die Stange (20) und die Schnellspanneinheit (30) miteinander verbindbar und voneinander lösbar sind.

## Beschreibung

Die vorliegende Erfindung betrifft eine Steckachse zur Befestigung eines Laufrads an einem Fahrradrahmen eines Fahrrads, umfassend eine Stange mit einem ersten Gewindeabschnitt zur Befestigung an einem ersten Rahmenabschnitt des Fahrradrahmens und einem Montageabschnitt zur Befestigung an einem zweiten Rahmenabschnitt des Fahrradrahmens, eine Schnellspanneinheit, welche mit der Stange verbunden ist, und einen Kupplungsadapterabschnitt zur Aufnahme eines Kupplungselements für ein Anbauteil.

Steckachsen mit einer Stange und einer Schnellspanneinheit sind allgemein bekannt. Auch ist ein solches System mit einem zusätzlichen Kupplungsadapterabschnitt zur Aufnahme eines Kupplungselements für ein Anbauteil wie etwa einen Fahrradanhänger bekannt. Bei einer Montage oder Demontage des Kupplungselements für das Anbauteil mittels der Schnellspanneinheit muss jedoch die gesamte Steckachse von dem Fahrradrahmen entfernt werden, um das Kupplungselement für das Anbauteil montieren bzw. demontieren zu können.

Ein Problem dabei besteht darin, dass sobald die Steckachse von dem Fahrradrahmen entfernt ist, das Laufrad nicht mehr fixiert ist. Da das Laufrad demnach beispielsweise durch Festhalten oder durch spezielle Vorrichtungen fixiert werden muss, gestaltet sich die Montage bzw. Demontage des Kupplungselements für das Anbauteil vergleichsweise kompliziert und zeitaufwändig.

Vor diesem Hintergrund ist es eine Aufgabe der vorliegenden Erfindung, eine Steckachse zur Befestigung eines Laufrads an einem Fahrradrahmen eines Fahrrads bereitzustellen, welche eine schnellere und einfachere Montage bzw. Demontage eines Kupplungselements für ein Anbauteil wie etwa einen Fahrradanhänger erlaubt.

Gemäß einem ersten Aspekt wird diese Aufgabe gelöst durch eine Steckachse zur Befestigung eines Laufrads an einem Fahrradrahmen eines Fahrrads, umfassend eine Stange mit einem ersten Gewindeabschnitt zur Befestigung an einem ersten Rahmenabschnitt des Fahrradrahmens und einem Montageabschnitt zur Befestigung an einem zweiten Rahmenabschnitt des Fahrradrahmens, eine Schnellspanneinheit, welche mit der Stange verbunden ist, und einen Kupplungsadapterabschnitt zur Aufnahme eines Kupplungselements für ein Anbauteil, wobei die Schnellspanneinheit einen zweiten Gewindeabschnitt umfasst und die Stange einen komplementär zu dem zweiten Gewindeabschnitt ausgebildeten dritten Gewindeabschnitt umfasst, sodass die Stange und die Schnellspanneinheit miteinander verbindbar und voneinander lösbar sind.

Ein wichtiges Merkmal der Erfindung ist somit, dass die Steckachse derart zweiteilig ausgebildet ist, dass sie bei einer Montage bzw. einer Demontage eines Anbauteils in Form eines Fahrradanhängers oder dergleichen nicht vollständig von dem Fahrradrahmen entfernt werden muss. Vielmehr kann ein Hauptteil der Steckachse in Form der Stange am Fahrradrahmen verbleiben, um das Laufrad daran zu sichern, während lediglich die mittels einer Gewindeverbindung mit der Stange verbundene Schnellspanneinheit entfernt werden muss, um das Anbauteil zu montieren bzw. demontieren. Auf diese Weise wird vorteilhaft eine einfachere und schnellere Montage/Demontage des Anbauteils ermöglicht.

Es ist anzumerken, dass in diesem Zusammenhang der erste Rahmenabschnitt ein hinterer rechter bzw. linker Rahmenabschnitt des Fahrradrahmens ist und der zweite Rahmenabschnitt dementsprechend ein in Bezug auf eine Fahrradlängsachse symmetrisch ausgebildeter, hinterer linker bzw. rechter Rahmenabschnitt des Fahrrads ist.

Das Laufrad kann insbesondere ein Hinterrad eines Fahrrads sein und das Anbauteil kann insbesondere ein Fahrradanhänger sein. Die Erfindung ist besonders vorteilhaft für einen Fahrradanhänger anwendbar, jedoch kann als Anbauteil zum Beispiel auch ein Gepäckträger oder dergleichen verwendet werden.

In einer bevorzugten Ausführungsform kann der Kupplungsadapterabschnitt an der Schnellspanneinheit bereitgestellt sein. Da zur Montage/Demontage des Anbauteils lediglich die Schnellspanneinheit von der Steckachse entfernt werden muss, ist es vorteilhaft, wenn der Kupplungsadapterabschnitt zur Aufnahme des Kupplungselements für die Kopplung mit dem Anbauteil auch an der Schnellspanneinheit vorgesehen ist. Bei einer Montage des Anbauteils kann dann auf vorteilhafte Weise lediglich die Schnellspanneinheit mittels des zweiten Gewindeabschnitts von der Steckachse und damit auch vom Fahrradrahmen entfernt werden, das Kupplungselement kann an dem Kupplungsadapterabschnitt angebracht, insbesondere auf diesen gesteckt, werden und die Schnellspanneinheit kann anschließend zusammen mit dem Kupplungselement für das Anbauteil wiederum mittels des zweiten Gewindeabschnitts wieder mit der Steckachse und dem Fahrradrahmen verbunden werden, womit das Anbauteil montiert ist.

Zudem kann der zweite Gewindeabschnitt bevorzugt ein an der Schnellspanneinheit vorgesehenes Außengewinde sein und der komplementär zu dem zweiten Gewindeabschnitt ausgebildete dritte Gewindeabschnitt ein an der Stange vorgesehenes Innengewinde sein. Diese Konfiguration ist einfach auszubilden, denkbar wäre allerdings auch ein an der Schnellspanneinheit vorgesehenes Innengewinde und ein an der Stange vorgesehenes Außengewinde. In vielen Fällen kann die Stange jedoch zum Beispiel hohl ausgebildet sein. Dann bietet sich wiederum ein Innengewinde an der Stange an.

Bevorzugt kann ein Durchmesser der Stange zwischen 8 mm und 16 mm, vorzugsweise 12 mm, betragen. Die Steckachse ist damit passend für einen überwiegenden Teil gängiger Fährräder.

Außerdem kann die Stange hohl ausgebildet sein, wodurch eine im Fahrradsegment nicht unerhebliche Gewichtseinsparung erreicht werden kann.

Vorteilhaft kann der an der Stange vorgesehene erste Gewindeabschnitt ein Außengewinde sein und die Steckachse ferner einen Gewindekörper mit einem komplementär zu dem ersten Gewindeabschnitt ausgebildeten Innengewinde umfassen, welche dazu eingerichtet ist die Stange an dem ersten Rahmenabschnitt des Fahrradrahmens zu sichern.

In einer Ausführungsform der Erfindung kann der an der Stange vorgesehene Montageabschnitt ein Sechskant-Außenprofil aufweisen. Dieser Montageabschnitt mit einem Sechskantprofil kann bei einer Montage der Steckachse an dem Fahrradrahmen mit einfachem Werkzeug, etwa in Form eines Maul- oder Gabelschlüssels, gegriffen werden, und in Wechselwirkung mit einer an dem entgegengesetzten Rahmenabschnitt bereitgestellten Mutter oder dergleichen an dem ersten Gewindeabschnitt festgezogen werden, wodurch die Steckachse montiert werden kann.

In einer bevorzugten Ausführungsform kann die Steckachse für ein Einbaumaß der Steckachse in einer Fahrradbreitenrichtung zwischen dem ersten Rahmenabschnitt des Fahrradrahmens und dem zweiten Rahmenabschnitt des Fahrradrahmens von 148 mm konfiguriert sein. Ein Einbaumaß von 148 mm für die Steckachse stellt einen Standard für ein Groß gängiger Fahrräder dar. Die Steckachse mit einem Einbaumaß von 148 mm ist damit für viele Fahrräder passend. Das Einbaumaß ist in diesem Zusammenhang ein innerer Abstand zwischen dem hinteren ersten/rechten Rahmenabschnitt und dem hinteren zweiten/linken Rahmenabschnitt des Fahrrads.

Da neben einem Einbaumaß von 148 mm ein Einbaumaß von 142 mm einen zweiten Standard für einen weiteren großen Teil auf dem Markt verfügbarer Fahrräder darstellt, kann in einer weiteren bevorzugten Ausführungsform die Steckachse durch einen zusätzlichen, an der Stange bereitgestellten Abstandshalter mit einer Länge von 6 mm in der Fahrradbreitenrichtung für ein Einbaumaß der Steckachse in der Fahrradbreitenrichtung zwischen dem ersten Rahmenabschnitt des Fahrradrahmens und dem zweiten Rahmenabschnitt des Fahrradrahmens von 142 mm konfiguriert sein. Somit ist die Steckachse mit einem Einbaumaß von 142 mm für viele Fahrräder passend.

Besonders bevorzugt kann eine Gewindesteigung des ersten Gewindeabschnitts zwischen 0,75 und 2,0, vorzugsweise 1,0 oder 1,5 oder 1,75, betragen und/oder eine Gewindelänge des ersten Gewindeabschnitts zwischen 10 mm und 30 mm, vorzugsweise zwischen 15 mm und 25 mm, noch bevorzugter 20 mm, betragen. In den meisten Fällen weisen die Aufnahmen am Fahrradrahmen für den ersten Gewindeabschnitt der Steckachse ein Innengewinde mit einer Steigung von 1,0 oder 1,5 oder 1,75 auf. Damit ist die Steckachse für die allermeisten gängigen Fahrräder passend.

Insbesondere kann eine Gewindesteigung des zweiten Gewindeabschnitts zwischen 0,5 und 1,5, vorzugsweise 1,0, betragen und/oder eine Gewindelänge des zweiten Gewindeabschnitts zwischen 12 mm und 32 mm, vorzugsweise zwischen 17 mm und 27 mm, noch bevorzugter 22 mm, betragen. Diese Maße haben sich bei der Konstruktion der Steckachse als besonders vorteilhaft herausgestellt.

In einer bevorzugten Ausführungsform der vorliegenden Erfindung kann die Schnellspanneinheit einen Stiftfortsatz, einen gelenkig mit dem Stiftfortsatz verbundenen Hebel und ein von dem Stiftfortsatz geführtes Klemmelement umfassen, wobei der zweite Gewindeabschnitt der Schnellspanneinheit an dem Stiftfortsatz ausgebildet ist und der Hebel und das Klemmelement derart konfiguriert sind, dass sie sich an einer in einer Fahrradbreitenrichtung nach außen weisenden Seite des zweiten Rahmenabschnitts des Fahrradrahmens angeordnet sind. Auf diese Weise kann der Hebel von außen betätigt werden, wodurch das Klemmelement gegen das Kupplungselement des Anbauteils gedrückt wird, um das Kupplungselement des Anbauteils zwischen der Schnellspanneinheit und einem Ende der Stange festzuklemmen. Eine Montage/Demontage der Schnellspanneinheit an/von der Steckachse bzw. eine Montage/Demontage des Anbauteils kann demnach besonders schnell, einfach und werkzeuglos erfolgen.

Der Kupplungsadapterabschnitt kann zwischen der Schnellspanneinheit und der Stange bereitgestellt sein und eine derartige Außenkontur aufweisen, dass das Kupplungselement für das Anbauteil in einer Fahrradbreitenrichtung im Wesentlichen nicht verschiebbar ist, insbesondere wobei der Kupplungsadapterabschnitt hohl ausgebildet ist und von dem Stiftfortsatz der Schnellspanneinheit geführt ist und ein Kopplungsabschnitt des Kupplungsadapterabschnitts in einer Aufnahmeaussparung der Stange aufgenommen ist. Dies kann zum Beispiel durch ein bestimmtes Profil wie etwa einen Vorsprung, eine Stufe oder einen verdickten Abschnitt in Fahrradbreitenrichtung erreicht werden.

Besonders bevorzugt kann die Steckachse derart konfiguriert sein, dass das Kupplungselement für das Anbauteil werkzeuglos daran befestigt werden kann. Durch das Vorhandensein einer Schnellspanneinheit, welche insbesondere mit einem Hebel bereitgestellt sein kann, können die Stange und die Schnellspanneinheit der Steckachse mittels des zweiten Gewindeabschnitts von Hand, ohne Werkzeug, voneinander getrennt werden, anschließend das Kupplungselement von Hand und ohne Werkzeug an der Steckachse, insbesondere an der Schnellspanneinheit, befestigt werden und dann die Schnellspanneinheit wiederum von Hand und ohne Werkzeug mittels des zweiten Gewindeabschnitts mit der Stange verbunden werden. Damit ist eine besonders einfache und schnelle Montage/Demontage des Kupplungselements für das Anbauteil möglich, ohne die Stange von dem Fahrradrahmen entfernen zu müssen.

Gemäß einem zweiten Aspekt wird die vorstehend definierte Aufgabe der vorliegenden Erfindung gelöst durch ein Fahrrad, umfassend eine Steckachse gemäß dem ersten Aspekt der Erfindung.

Die zweiteilig ausgebildete Steckachse muss bei einer Montage bzw. einer Demontage eines Anbauteils, etwa in Form eines Fahrradanhängers, Gepäckträgers oder dergleichen, an oder von dem Fahrrad nicht vollständig von dem Fahrradrahmen entfernt werden. Vielmehr kann ein Hauptteil der Steckachse in Form der Stange am Fahrradrahmen verbleiben, um das Laufrad daran zu sichern, während lediglich die mittels einer Gewindeverbindung mit der Stange verbundene Schnellspanneinheit entfernt werden muss, um das Anbauteil am Fahrrad zu montieren bzw. demontieren. Auf diese Weise wird vorteilhaft eine einfachere und schnellere Montage/Demontage des Anbauteils am Fahrrad ermöglicht.

Die Erfindung wird nachfolgend anhand eines bevorzugten Ausführungsbeispiels der vorliegenden Erfindung unter Bezugnahme auf die beigefügten Zeichnungen näher erläutert. Es zeigen:
- Figur 1: eine Ansicht einer Steckachse gemäß dem bevorzugten Ausführungsbeispiel der vorliegenden Erfindung in einem Halbschnitt und
- Figur 2: eine Explosionsansicht der Steckachse gemäß dem bevorzugten Ausführungsbeispiel der vorliegenden Erfindung im Halbschnitt.

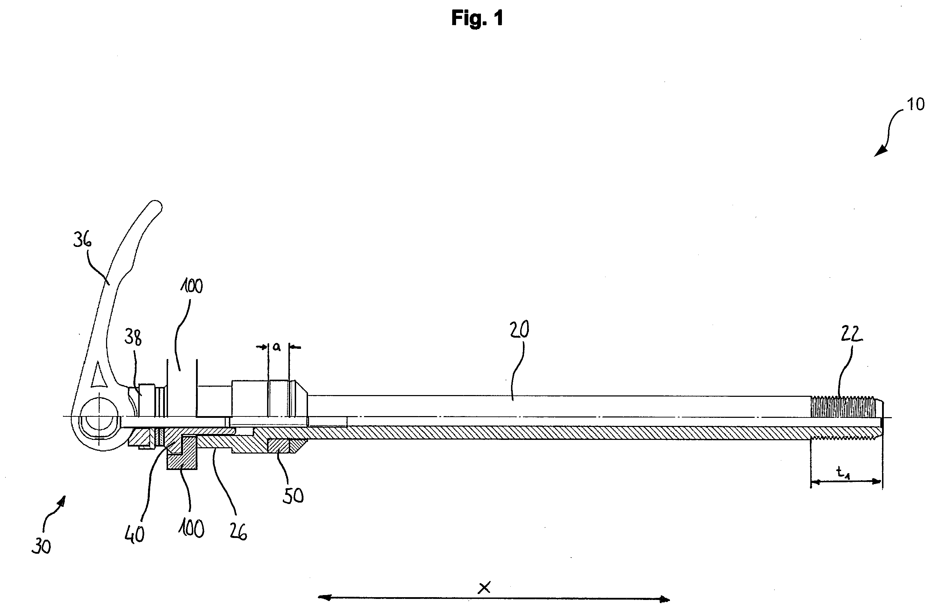

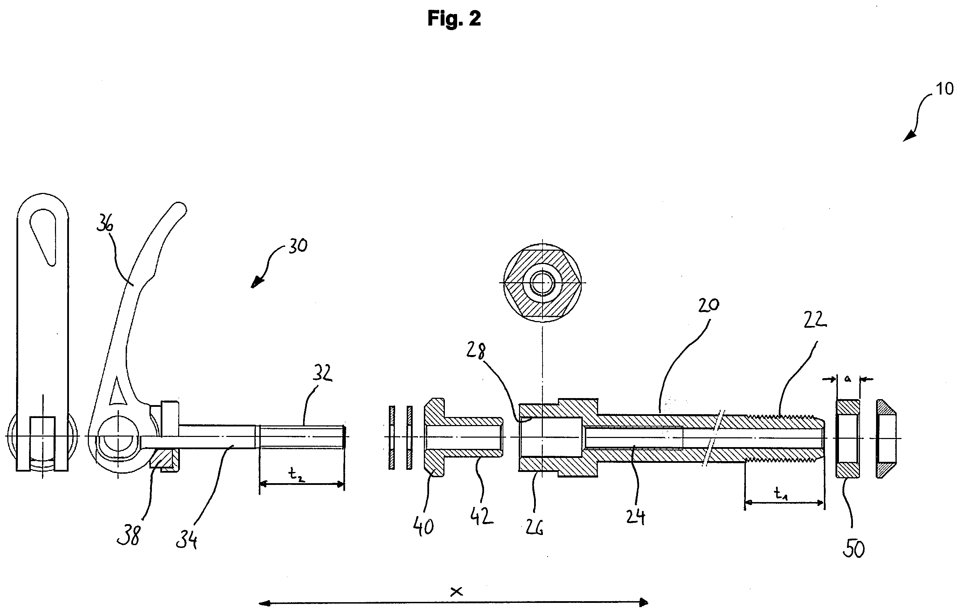

Eine Steckachse zur Befestigung eines Laufrads, insbesondere eines Hinterrads, an einem Fahrradrahmen eines Fahrrads gemäß dem bevorzugten Ausführungsbeispiel ist in Figur 1 ganz allgemein mit dem Bezugszeichen 10 bezeichnet und in einem Halbschnitt dargestellt. Wie auch in Figur 2 ist dabei ein in der Ansicht oberer Teil der Steckachse 10 als eine Seitenansicht gezeigt und ein in der Ansicht unterer Teil der Steckachse 10 als Schnittansicht gezeigt.

In Figur 2 ist die Steckachse 10, ebenfalls im Halbschnitt, in einer Explosionsansicht dargestellt, wodurch die einzelnen Elemente der Steckachse 10 besser erkennbar werden.

Die Steckachse 10 umfasst eine Stange 20 mit einem ersten Gewindeabschnitt 22, welcher insbesondere als Außengewinde 22 ausgebildet sein kann, zur Befestigung an einem ersten bzw. rechten Rahmenabschnitt des Fahrradrahmens. An der Stange 20 ist ferner ein Montageabschnitt 26 zur Befestigung an einem zweiten bzw. linken Rahmenabschnitt des Fahrradrahmens vorgesehen. Es kann ein Gewindekörper, insbesondere eine Mutter, mit einem komplementär zu dem ersten Gewindeabschnitt 22 ausgebildeten Innengewinde vorgesehen sein, welche die Stange 20 an dem ersten bzw. rechten Rahmenabschnitt des Fahrradrahmens sichert. Die Stange 20 erstreckt sich wie auch die Steckachse 10 selbst entlang einer Fahrradbreitenrichtung x. Ein Durchmesser der Stange 20 kann zwischen 8 mm und 16 mm liegen und beträgt in dem bevorzugten Ausführungsbeispiel der vorliegenden Erfindung vorzugsweise 12 mm. Zudem kann die Stange 20 vorzugsweise hohl ausgebildet sein. Der an der Stange 20 vorgesehene Montageabschnitt 26 kann ein Sechskant-Außenprofil 26 aufweisen. Dieser Montageabschnitt 26 mit Sechskantprofil 26 kann bei einer Montage der Steckachse 10 an dem Fahrradrahmen zum Beispiel mit einem Gabelschlüssel festgehalten werden, um eine vorhandene Mutter oder dergleichen festzuziehen und die Steckachse 10 so an dem Fahrradrahmen zu befestigen.

Eine Gewindesteigung des insbesondere als Außengewinde 22 bereitgestellten, ersten Gewindeabschnitts 22 kann zwischen 0,75 und 2,0 liegen und beträgt in dem bevorzugten Ausführungsbeispiel der vorliegenden Erfindung vorzugsweise 1,0 oder 1,5 oder 1,75. Zudem kann eine Gewindelänge t₁ des insbesondere als Außengewinde 22 bereitgestellten, ersten Gewindeabschnitts 22 zwischen 10 mm und 30 mm, bevorzugter zwischen 15 mm und 25 mm, liegen und beträgt in dem bevorzugten Ausführungsbeispiel der vorliegenden Erfindung vorzugsweise 20 mm. Dadurch ist die Steckachse 10 für einen Großteil gängiger Fahrräder passend, da diese Aufnahmen am Fahrradrahmen für den ersten Gewindeabschnitt 22 der Steckachse 10 in Form eines Innengewindes mit einer Steigung von 1,0 oder 1,5 oder 1,75 aufweisen.

Außerdem umfasst die Steckachse 10 eine Schnellspanneinheit 30. Die Schnellspanneinheit 30 ist mittels eines zweiten Gewindeabschnitts 32, welcher insbesondere als Außengewinde 32 ausgebildet sein kann, und einem an der Stange 20 bereitgestellten dritten Gewindeabschnitt 24, welcher insbesondere als Innengewinde 24 ausgebildet sein kann, mit der Stange 20 verbunden, sodass die Stange 20 und die Schnellspanneinheit 30 miteinander verbindbar und voneinander lösbar sind.

Die Schnellspanneinheit 30 kann einen Stiftfortsatz 34, einen gelenkig mit dem Stiftfortsatz 34 verbundenen Hebel 36 und ein von dem Stiftfortsatz 34 geführtes Klemmelement 38 umfassen. Der insbesondere als Außengewinde 32 ausgebildete zweite Gewindeabschnitt 32 der Schnellspanneinheit 30 kann an dem Stiftfortsatz 34 ausgebildet sein. Der Hebel 36 und das Klemmelement 38 können an einer in der Fahrradbreitenrichtung x nach außen weisenden Seite des zweiten bzw. linken Rahmenabschnitts des Fahrradrahmens angeordnet sein. Dadurch kann von außen auf den Hebel 36 zugegriffen werden, um ihn zu betätigen, wodurch das Klemmelement 38 gegen das Kupplungselement 100 des Anbauteils gedrückt wird, um das Kupplungselement 100 des Anbauteils zwischen der Schnellspanneinheit 30 und einem Ende der Stange 20 festzuklemmen.

Eine Gewindesteigung des insbesondere als Außengewinde 32 bereitgestellten, zweiten Gewindeabschnitts 32 kann zwischen 0,5 und 1,5 liegen und beträgt in dem bevorzugten Ausführungsbeispiel der vorliegenden Erfindung vorzugsweise 1,0. Zudem kann eine Gewindelänge t₂ des insbesondere als Außengewinde 32 bereitgestellten, zweiten Gewindeabschnitts 32 zwischen 12 mm und 32 mm, bevorzugter zwischen 17 mm und 27 mm, liegen und beträgt in dem bevorzugten Ausführungsbeispiel der vorliegenden Erfindung vorzugsweise 22 mm.

Die Steckachse 10 kann für ein Einbaumaß in der Fahrradbreitenrichtung x zwischen dem ersten bzw. rechten Rahmenabschnitt des Fahrradrahmens und dem zweiten bzw. linken Rahmenabschnitt des Fahrradrahmens von 148 mm konfiguriert sein. In den Figuren 1 und 2 ist jedoch zusätzlich ein Abstandshalter 50 mit einer Länge a von 6 mm in der Fahrradbreitenrichtung x an der Stange 20 bereitgestellt. Dadurch ist die Steckachse 10 für ein Einbaumaß in der Fahrradbreitenrichtung x von 142 mm konfiguriert. Ein Einbaumaß der Steckachse 10 von 148 mm kann erreicht werden, wenn der Abstandshalter 50 einfach weggelassen wird.

Weiterhin umfasst die Steckachse 10 einen Kupplungsadapterabschnitt 40 zur Aufnahme eines Kupplungselements 100 für ein Anbauteil, insbesondere einen Fahrradanhänger oder Gepäckträger. Das heißt, das Anbauteil kann mittels der Kupplungselements 100 an dem Kupplungsadapterabschnitt 40 der Steckachse 10 befestigt werden. Der Kupplungsadapterabschnitt 40 kann insbesondere an der Schnellspanneinheit 30 bereitgestellt sein.

Der Kupplungsadapterabschnitt 40 kann insbesondere zwischen der Schnellspanneinheit 30 und der Stange 20 bereitgestellt sein und eine derartige Außenkontur aufweisen, dass das Kupplungselement 100 für das Anbauteil in der Fahrradbreitenrichtung x im Wesentlichen nicht verschiebbar ist. Insbesondere kann der Kupplungsadapterabschnitt 40 hohl ausgebildet und von dem Stiftfortsatz 34 der Schnellspanneinheit 30 geführt sein. Ein Kopplungsabschnitt 42 des Kupplungsadapterabschnitts 40 kann insbesondere in einer Aufnahmeaussparung 28 der Stange 20 aufgenommen sein.

Die vorstehend beschriebene Steckachse 10 ist insbesondere dazu geeignet, dass das Kupplungselement 100 für das Anbauteil werkzeuglos daran befestigt werden kann.

## Patentansprüche

1. Steckachse (10) zur Befestigung eines Laufrads an einem Fahrradrahmen eines Fahrrads, umfassend
eine Stange (20) mit einem ersten Gewindeabschnitt (22) zur Befestigung an einem ersten Rahmenabschnitt des Fahrradrahmens und einem Montageabschnitt (26) zur Befestigung an einem zweiten Rahmenabschnitt des Fahrradrahmens,
eine Schnellspanneinheit (30), welche mit der Stange (20) verbunden ist, und
einen Kupplungsadapterabschnitt (40) zur Aufnahme eines Kupplungselements (100) für ein Anbauteil,
**dadurch gekennzeichnet, dass**
die Schnellspanneinheit (30) einen zweiten Gewindeabschnitt (32) umfasst und die Stange (20) einen komplementär zu dem zweiten Gewindeabschnitt (32) ausgebildeten dritten Gewindeabschnitt (24) umfasst, sodass die Stange (20) und die Schnellspanneinheit (30) miteinander verbindbar und voneinander lösbar sind.

2. Steckachse (10) nach Anspruch 1, **dadurch gekennzeichnet, dass** der Kupplungsadapterabschnitt (40) an der Schnellspanneinheit (30) bereitgestellt ist.

3. Steckachse (10) nach Anspruch 1 oder Anspruch 2, **dadurch gekennzeichnet, dass**
der zweite Gewindeabschnitt (32) ein an der Schnellspanneinheit (30) vorgesehenes Außengewinde (32) ist und
der komplementär zu dem zweiten Gewindeabschnitt (32) ausgebildete dritte Gewindeabschnitt (24) ein an der Stange (20) vorgesehenes Innengewinde (24) ist.

4. Steckachse (10) nach einem der vorhergehenden Ansprüche, **dadurch gekennzeichnet, dass**
ein Durchmesser der Stange (20) zwischen 8 mm und 16 mm, vorzugsweise 12 mm, beträgt.

5. Steckachse (10) nach einem der vorhergehenden Ansprüche, **dadurch gekennzeichnet, dass**
die Stange (20) hohl ausgebildet ist.

6. Steckachse (10) nach einem der vorhergehenden Ansprüche, **dadurch gekennzeichnet, dass**
der an der Stange (20) vorgesehene erste Gewindeabschnitt (22) ein Außengewinde (22) ist und
die Steckachse (10) ferner einen Gewindekörper mit einem komplementär zu dem ersten Gewindeabschnitt (22) ausgebildeten Innengewinde umfasst, wobei der Gewindekörper dazu eingerichtet ist, die Stange (20) an dem ersten Rahmenabschnitt des Fahrradrahmens zu sichern.

7. Steckachse (10) nach einem der vorhergehenden Ansprüche, **dadurch gekennzeichnet, dass**
an der Stange (20) ein Montageabschnitt (26) mit einem Sechskant-Außenprofil (26) vorgesehen ist.

8. Steckachse (10) nach einem der vorhergehenden Ansprüche, **dadurch gekennzeichnet, dass**
die Steckachse (10) für ein Einbaumaß der Steckachse (10) in einer Fahrradbreitenrichtung (x) zwischen dem ersten Rahmenabschnitt des Fahrradrahmens und dem zweiten Rahmenabschnitt des Fahrradrahmens von 148 mm konfiguriert ist.

9. Steckachse (10) nach Anspruch 8, **dadurch gekennzeichnet, dass**
die Steckachse (10) durch einen zusätzlichen, an der Stange (20) bereitgestellten Abstandshalter (50) mit einer Länge (a) von 6 mm in der Fahrradbreitenrichtung (x) für ein Einbaumaß der Steckachse (10) in der Fahrradbreitenrichtung (x) zwischen dem ersten Rahmenabschnitt des Fahrradrahmens und dem zweiten Rahmenabschnitt des Fahrradrahmens von 142 mm konfiguriert ist.

10. Steckachse (10) nach einem der vorhergehenden Ansprüche, **dadurch gekennzeichnet, dass**
eine Gewindesteigung des ersten Gewindeabschnitts (22) zwischen 0,75 und 2,0, vorzugsweise 1,0 oder 1,5 oder 1,75, beträgt
und/oder
eine Gewindelänge (t₁) des ersten Gewindeabschnitts (22) zwischen 10 mm und 30 mm, vorzugsweise zwischen 15 mm und 25 mm, noch bevorzugter 20 mm, beträgt.

11. Steckachse (10) nach einem der vorhergehenden Ansprüche, **dadurch gekennzeichnet, dass**
eine Gewindesteigung des zweiten Gewindeabschnitts (32) zwischen 0,5 und 1,5, vorzugsweise 1,0, beträgt
und/oder
eine Gewindelänge (t₂) des zweiten Gewindeabschnitts (32) zwischen 12 mm und 32 mm, vorzugsweise zwischen 17 mm und 27 mm, noch bevorzugter 22 mm, beträgt.

12. Steckachse (10) nach einem der vorhergehenden Ansprüche, **dadurch gekennzeichnet, dass**
die Schnellspanneinheit (30) einen Stiftfortsatz (34), einen gelenkig mit dem Stiftfortsatz (34) verbundenen Hebel (36) und ein von dem Stiftfortsatz (34) geführtes Klemmelement (38) umfasst,
wobei der zweite Gewindeabschnitt (32) der Schnellspanneinheit (30) an dem Stiftfortsatz (34) ausgebildet ist und
der Hebel (36) und das Klemmelement (38) derart konfiguriert sind, dass sie sich an einer in einer Fahrradbreitenrichtung (x) nach außen weisenden Seite des zweiten Rahmenabschnitts des Fahrradrahmens angeordnet sind.

13. Steckachse (10) nach einem der vorhergehenden Ansprüche und insbesondere nach Anspruch 12, **dadurch gekennzeichnet, dass**
der Kupplungsadapterabschnitt (40) zwischen der Schnellspanneinheit (30) und der Stange (20) bereitgestellt ist und eine derartige Außenkontur aufweist, dass das Kupplungselement (100) für das Anbauteil in einer Fahrradbreitenrichtung (x) im Wesentlichen nicht verschiebbar ist, insbesondere wobei
der Kupplungsadapterabschnitt (40) hohl ausgebildet ist und von dem Stiftfortsatz (34) der Schnellspanneinheit (30) geführt ist und
ein Kopplungsabschnitt (42) des Kupplungsadapterabschnitts (40) in einer Aufnahmeaussparung (28) der Stange (20) aufgenommen ist.

14. Steckachse (10) nach einem der vorhergehenden Ansprüche, **dadurch gekennzeichnet, dass**
die Steckachse (10) derart konfiguriert ist, dass das Kupplungselement (100) für das Anbauteil werkzeuglos daran befestigt werden kann.

15. Fahrrad, umfassend eine Steckachse (10) nach einem der vorhergehenden Ansprüche.
